# EUROPEAN PATENT APPLICATION

(11) **EP 4 726 494 A1**
(43) Date of publication of application: **15.04.2026**
(21) Application number: 25170733.7
(22) Date of filing: 15.04.2025
(51) Int. Cl.: G05F 1/571, H02H 9/04, H02M 1/32, G05F 1/613, G05F 1/618

(54) **VOLTAGE LIMITER FOR A LOW POWER VOLTAGE REGULATOR**

(30) Priority: 10.10.2024 EP 24205885
(71) Applicant: EM Microelectronic-Marin SA, 2074 Marin-Epagnier (CH)
(72) Inventor: NERAD, Jiri, 15800 Praha (CZ)
(74) Representative: ICB SA

(57) **Abstract**

The invention relates to a voltage limiter for a voltage regulator driving a digital or switching circuit, wherein the voltage limiter comprises a power input terminal connectable to the output of a voltage regulator; the voltage limiter further comprising a differential pair arrangement connected to a reference voltage input terminal and the power input terminal, an auxiliary differential mirror, an auxiliary load branch connecting the power input terminal to ground comprising an auxiliary load transistor device and wherein the voltage limiter is configured to activate the auxiliary load transistor device when the voltage at the power input terminal is larger than the voltage at the reference input terminal.

## Description

### Technical field

The present disclosure relates to the field of voltage limiters for low power voltage regulators, and in particular to wideband low power voltage regulators for use with microprocessors, microcontrollers or other digital circuits. The disclosure further relates to a portable electronic device comprising such a voltage limiter.

### Background of the invention

As the speed of microprocessors increases, consistent with CMOS transistor feature size reductions, the required power supply voltage continues to shrink. Increased load and higher processor speed result in more severe current transients on the microprocessor power supply. For example, as a microprocessor executes instructions, particularly at a comparatively fast rate, current transients may occur that may cause noise on the power supply and may hence induce errors.

When voltage regulators work with a high load, a sudden or sharp decrease of output load current can result in a temporary increase or overshoot of the output voltage. Such a behavior is undesired as it can cause damage to the digital or switching circuit powered by the regulator or it can cause errors in digital signal processing. Among the usual switching circuits powered by these voltage regulators are digital or logic circuit blocks usually consisting of standard cells which may have various maximum supply voltage limits, hereby having a limited tolerance for overvoltage, depending on the process or technology used for their manufacturing.

### Summary of the invention

In order to address the above-mentioned problems, the current disclosure presents a voltage limiter which acts only when needed to reduce the excess voltage or overshoot.

In one aspect of the current disclosure there is provided a voltage limiter for a voltage regulator driving a digital or switching circuit, e.g. a microprocessor, the voltage limiter comprising a power input terminal connectable to the power output terminal of a voltage regulator; the voltage limiter further comprising an auxiliary differential pair arrangement connected to a reference voltage input terminal and the power input terminal, an auxiliary differential mirror, an auxiliary load branch connecting the power input terminal to ground comprising an auxiliary load transistor device and wherein the voltage limiter is configured to activate the auxiliary load transistor device when the voltage at power input is larger than the voltage at reference input terminal.

According to a further aspect, the auxiliary differential pair arrangement further comprises a first and a second transistor devices and the reference voltage input terminal is connected to the gate of the first transistor device and the power input terminal is connected to the gate of the second transistor device, the differential pair arrangement further comprising the drain of the second transistor device being connected to the gate of the auxiliary load transistor device.

According to a further aspect, the auxiliary differential mirror comprises a first and a second transistor devices in mirror configuration wherein the drain of the first transistor device is connected to the drain of the first transistor device of the auxiliary differential pair arrangement and wherein the drain of the second transistor device is connected to the drain of the second transistor device of the auxiliary differential pair arrangement.

According to a further aspect, the voltage limiter further comprises a slew rate control capacitor connected to the drains of the second transistor device of the auxiliary differential mirror and the second transistor device of the auxiliary differential pair arrangement configured to determine the slew rate or the speed of change of the gate source control voltage of the auxiliary load transistor device.

According to a further aspect, the voltage limiter further comprises a voltage shifter connected to the gate of the first transistor device of the auxiliary differential pair arrangement.

According to a further aspect, the voltage limiter further comprises a resistor divider connected to the gate of the second transistor device of the auxiliary differential pair arrangement with a first resistor connected to the power input terminal of the voltage limiter and a second resistor connected to the ground terminal.

According to a further aspect, a circuit system is provided wherein the circuit system comprises a voltage limiter as above described and a voltage regulator, wherein the voltage regulator comprises a boost circuit and a regulator boost input terminal, wherein the power output terminal of the voltage regulator is connectable to a power terminal of a digital or switching circuit.

According to a further aspect, the voltage regulator comprises an amplifier main differential pair comprising a first and second transistor devices with a first specification and wherein the auxiliary differential pair arrangement has a second specification, and wherein the first and second specifications are identical or scaled by the same factor.

According to a further aspect, the voltage regulator comprises a current mirror circuit and an adaptive bias circuit.

According to a further aspect, the voltage limiter comprises a current mirror replica and an adaptive bias replica.

According to a further aspect, the current mirror replica of the voltage limiter is connected to the current mirror circuit of the voltage regulator, and the adaptive bias replica of the voltage limiter is connected to the adaptive bias circuit of the voltage regulator.

According to a further aspect, each replica device generates an output current that tracks the output current of the respective mirror circuit, wherein the mirror current and the respective replica current are either identical or scaled by the same ratio as that used between the main differential pair and the auxiliary differential pair.

According to a further aspect, a portable electronic device comprising a circuit system according to the previous aspects is provided, wherein the portable electronic device comprises at least a first digital or switching circuit connected to the output terminal of the voltage regulator of the circuit system wherein said output terminal is also connected to the power input terminal of the voltage limiter.

According to a further aspect, the at least one first digital or switching circuit comprises at least a boost output terminal connected to the regulator boost input terminal of the voltage regulator.

### Brief description of the drawings

In the following, embodiments of the current disclosure are illustrated by making reference to the drawings, in which:
- Figure 1 shows a block diagram of a circuit system according to one embodiment of the current disclosure.
- Figure 2 shows a block diagram of a voltage regulator according to one embodiment of the current disclosure.
- Figure 3 shows a schematic diagram of a voltage regulator according to one embodiment of the current disclosure.
- Figure 4a shows a schematic diagram of a voltage limiter according to one embodiment of the current disclosure.
- Figure 4b shows a schematic diagram of a voltage limiter according to a further embodiment of the current disclosure.
- Figure 5 shows a schematic diagram of a voltage limiter according to a further embodiment of the current disclosure.
- Figure 6 shows a schematic diagram of a voltage limiter according to a further embodiment of the current disclosure.
- Figure 7 shows a schematic diagram of a voltage limiter according to a further embodiment of the current disclosure.
- Figure 8 shows a schematic diagram of a circuit system according to one embodiment of the current disclosure.

### Detail description of the invention

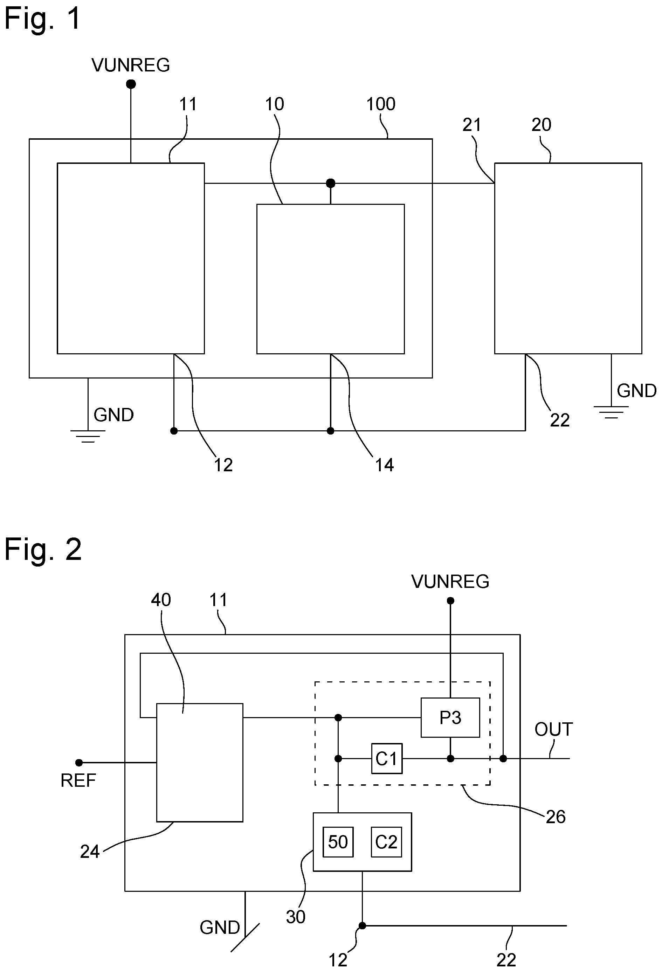

In Figure 1 a circuit system (100) according to one embodiment of the current disclosure is shown. The circuit system comprises a voltage regulator 11 and a voltage limiter 10 connectable to a power terminal 21 of a digital or switching circuit 20. The voltage limiter 10 is connectable to the voltage regulator and may have at least one connection with an output terminal of the voltage regulator 11 being input into the voltage limiter 10 but may have further connections as it will be described below for the respective embodiments.

In Figure 2, a simplified and schematic block diagram of a possible embodiment of voltage regulator 11 is provided. The voltage regulator 11 comprises an unregulated voltage terminal VUNREG and an output terminal VREGOUT. The output terminal VREGOUT is connected to the power input terminal VREGIN of the voltage limiter 10. The voltage regulator 11 further comprises a front stage 24 or front end and a back stage 26 or back end.

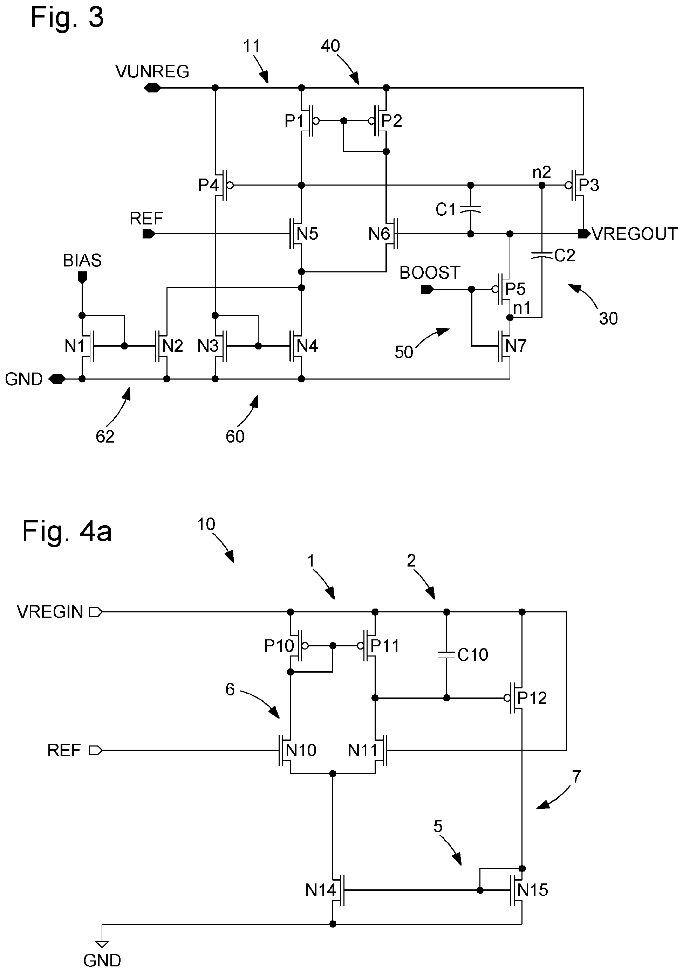

Typically, the front stage 24 comprises an amplifier circuit 40 that may be implemented as a differential amplifier that will be explained in more detail in Figure 3. The regulator 11 further comprises a regulator boost input terminal 12 that is connected to a boost signal output terminal 22 of the digital or switching circuit 20. Moreover, the voltage regulator 11, the voltage limiter 10 and the digital or switching circuit 20 are connected to the ground terminal GND.

The back stage 26 comprises a pass device P3 and a first capacitor C1. The pass device P3 is typically implemented as a PMOS type transistor and the first capacitor C1 operates as a so-called Miller capacitor.

Via the regulator boost input terminal 12 the regulator 11 receives a boost signal generated by the digital or switching circuit 20 and provided via the boost signal output terminal 22. In this way and as soon as a load activity of the digital or switching circuit 20 starts, the regulator 11 immediately receives a respective boost signal which triggers instantaneous transition of the regulator 11 from a low power mode into a high power mode or vice versa. The regulator performance no longer depends on the speed of the conventional feedback loop that senses or detects whether the load at the output terminal VREGOUT changes. Rather, and concurrent to a switching or a processing activity of the digital or switching circuit 20 the voltage regulator 11 is deterministically switched from a low power mode into a high power mode or vice versa.

In order to provide an efficient and fast switching, the regulator 11 comprises a boost circuit 30 that is connected to the gate of the pass device P3 and to the regulator boost input terminal 12. The boost circuit 30 comprises at least a boost capacitor C2 and a switching arrangement 50. The switching arrangement 50 is connected to the regulator boost input terminal 12 and is further connected to the boost capacitor C2. The switching arrangement 50 is controllable by a boost signal that is generated by the digital or switching circuit 20. Since the switching arrangement 50 is connected to the regulator boost input terminal 12, a control signal or boost signal generated by the digital or switching circuit 20 is transferred via the connection of the boost signal output terminal 22 to the regulator boost input terminal 12 and hence to the switching arrangement 50.

In Figure 3, the implementation of boost circuit 30 and the switching arrangement 50 according to an embodiment of voltage regulator 11 is illustrated in more detail. As indicated, voltage regulator 11 comprises a bias terminal BIAS, and a reference node REF. The bias terminal is connected to a current mirror circuit 62 formed by two NMOS type devices, namely a first NMOS transistor N1 and a second NMOS transistor N2. The current mirror circuit 62 forms a constant bias circuit of the front stage or front end of the regulator 11. The drain of the transistor N1 is connected to the bias terminal BIAS while the gates of both transistors N1 and N2 are connected to the bias terminal BIAS.

A drain of the second transistor N2 is connected to the source terminals of the input differential transistors N5, N6.

There is further provided an adaptive bias circuit 60 which is formed by another current mirror circuit comprising two further NMOS type transistor devices N3 and N4. Also here, the gates of transistors N3, N4 are mutually interconnected. The sources N3 and N4 are connected to the ground terminal GND, while the drain of N3 is connected to the drain of another PMOS device P4 and the drain of the transistor N4 is connected to the source terminals of the input differential transistors N5, N6.

The PMOS transistor device P4 is a scaled copy of P3. The gates of the transistors P3 and P4 are mutually connected. The sources of P3 and P4 are both connected to the unregulated input terminal VUNREG.

There is further provided an amplifier core 40 that comprises two PMOS transistors P1, P2 arranged in a current mirror configuration, and which further comprises two NMOS transistors N5 and N6. The source of N5 is connected to the source of N6. A gate of N5 is connected to the reference terminal REF and the gate of N6 is connected to the regulated output terminal VREGOUT. The drain of N5 is connected to the gates of P3 and P4 and the drain of N6 is connected to the drain of P2. The sources of P1 and P2 are both connected to the unregulated voltage input terminal VUNREG and to the source of P3.

The adaptive bias circuit 60 enhances the effect of boost charge provided by the boost capacitor C2. When a boost charge injection comes in the low power mode, the adaptive bias circuit 60 amplifies this effect thanks to positive feedback that exists in the loop formed by the bias devices P4, N3, N4 and the amplifier core 40 if the voltage at the output terminal VREGOUT is smaller than the voltage at the reference terminal REF. In contrast, at high power, the effect of a boost charge transfer, in either direction, is limited as it is relatively small in comparison with static terminal currents in a front stage of the regulator 10. In situations where there should be an incorrect boost signal at the regulator boost input terminal 12 the adaptive bias 60 will not join. The adaptive bias 60 will only contribute and enhance the effect of the boost capacitor C2 if the voltage at the output terminal VREGOUT is smaller than the voltage at the reference terminal REF. Moreover, the adaptive bias circuit only provides a substantial effect when the output terminal and hence the regulator is driven in low power mode.

In typical implementations, the capacitance of the Miller capacitor C1 is larger than the capacitance of the boost capacitor C2. When the regulator 10 is switched from a low power mode into a high power mode and when the boost capacitor C2 and the charge stored therein supplies an extra charge to the Miller capacitor C1, the voltage at gate of output pass device P3 is instantaneously adjusted and the current via this device is instantaneously increased so as to react stronger and quicker to a varying load at the output terminal VREGOUT.

The switching arrangement 50 comprises a PMOS type transistor device P5 and an NMOS type transistor device N7, as illustrated in Figure 2. The gates of the switching transistors P5 and N7 are both connected to the regulator boost input terminal 12. In this way, the PMOS transistor P5 and the NMOS transistor N7 are switchable concurrently as a rising edge is provided from the boost signal output terminal 22 of the digital or switching circuit 20. The drain of the transistor P5 and the drain of the transistor N7 are connected to a first node n1. The first node n1 is further connected to the boost capacitor C2. An opposite terminal of the boost capacitor C2 is connected to a second node n2. The second node n2 is connected to one terminal of a first capacitor C1, presently implemented as a Miller capacitor C1 while an opposite terminal of the Miller capacitor C1 is connected to the output terminal VREGOUT. The second node n2 is also connected to the gate terminal of the pass device P3.

When in a low power mode, the PMOS transistor P5 is conducting or closed while the NMOS transistor N7 is non-conducting or open. In this configuration the boost capacitor C2 and the Miller capacitor C1 are connected in parallel. If a rising edge is provided to the regulator boost input terminal 12, the two CMOS transistor devices P5 and N7 are subject to a concurrent switching. Then, the transistor device N7 becomes conductive or closed while the transistor device P5 becomes non-conducting or open. Consequently, the boost capacitor C2 is now connected between node n2 and ground terminal GND and the Miller capacitor C1 and the boost capacitor C2 are now connected in series, forming a capacitive divider. A charge previously accumulated in the boost capacitor C2 can then be redistributed to the Miller capacitor C1. In effect, instantaneous voltage transition can be provided at the gate of the pass device P3, thereby increasing the current flowing into the output terminal VREGOUT at an early stage of a regulator action in response to a varying load condition.

While such arrangement of the voltage regulator 11 can provide a very fast response to a sharp increase of the load current, it includes no elements or circuits to handle a sharp decline of the load. If the current via the output terminal VREGOUT suddenly drops by a large amount, the adaptive bias loop 60 is deactivated. Consequently, the amplifier core 40 operates at its quiescent or minimum bias current and is unable to apply large transient current into the Miller capacitor C1 in order to induce a fast voltage transition at the gate of the pass device P3. Therefore, for relatively long time, the pass device remains in the high current mode and the regulator continues to supply excessive current into the load, leading to the overvoltage condition at the output terminal VREGOUT.

In Figure 4a, a voltage limiter 10 according to one embodiment of the current disclosure is illustrated in more detail. The voltage limiter 10 comprises a reference node REF, as well as a power input terminal VREGIN connectable to the output terminal VREGOUT of voltage regulator 11, and a ground terminal GND. The voltage limiter 10 further comprises an auxiliary differential pair arrangement 6 comprising first and second transistor devices N10 and N11, which may be implemented as NMOS type transistors. The voltage limiter 10 further comprises an auxiliary differential mirror 1 comprising first and second transistor devices P10 and P11, which may be implemented as PMOS type transistors. The voltage limiter 10 further comprises an auxiliary load branch 7, comprising an auxiliary load transistor device P12, which may be implemented as a PMOS type transistor. The voltage limiter 10 further comprises an auxiliary feedback mirror 5, comprising first and second transistor devices N14 and N15, which may be implemented as NMOS type transistors.

According to an embodiment, the voltage limiter 10 further comprises a slew rate control device 2, which may be implemented as capacitor C10. Following this embodiment, due to the presence of the slew rate control capacitor C10, sharp or abrupt changes to the operating point of the voltage limiter due to positive feedback can be avoided. The presence of said capacitor limits the slew rate or speed of change of the voltage at this high impedance node which in turn limits the bandwidth of the entire positive feedback loop, preventing extremely fast transient response.

As it can be seen, transistor devices P10 and P11 are in a mirror configuration. The sources of transistor devices P10 and P11 are connected to the power input terminal VREGIN of the voltage limiter 10, to a first terminal of capacitor C10 and the source of transistor device P12. The second terminal of capacitor C10 is connected to the drains of transistor devices N11 and P11 and to the gate of transistor device P12. The gates of transistor devices P10 and P11 are connected to the drain of transistor device N10. Further, the gate of the first transistor device N10 of the auxiliary differential arrangement is connected to the reference voltage input terminal REF and the gate of the second transistor device N11 of the auxiliary differential arrangement is connected to the power input terminal VREGIN.

The gates of transistor devices N14 and N15 are mutually connected to the drain of N15. Further, the drain of transistor device N15 is connected to the drain of transistor device P12. The drain of transistor device N14 is connected to the source terminals of transistor devices N10 and N11.

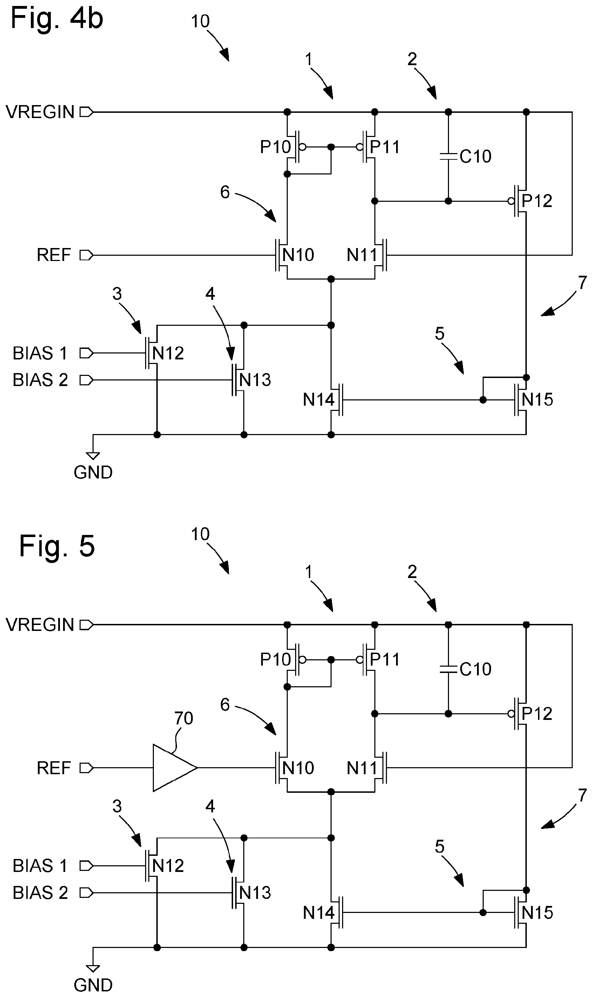

Figure 4b shows a voltage limiter 10 according to a further embodiment of the current disclosure. According to this further embodiment, limiter 10 comprises a constant bias voltage terminal BIAS1 and an adaptive bias voltage terminal BIAS2. The limiter 10 further comprises a constant bias replica 3 comprising a transistor device N12, which may be implemented as an NMOS transistor. The limiter 10 further comprises an adaptive bias replica 4 comprising a transistor device N13, which may be implemented as an NMOS transistor.

The gate of transistor device N12 is connected to the constant bias voltage terminal BIAS1. The gate of transistor device N13 is connected to the adaptive voltage bias terminal BIAS2. The sources of transistor devices N12 and N13 are connected to the ground terminal GND, while the drains of N12 and N13 are connected to the source terminals of transistor devices N10 and N11 and the drain terminal of transistor device N14 of the auxiliary feedback mirror 5.

In Figure 5 a voltage limiter 10 according to a further embodiment is shown. Voltage limiter 10 may further comprise a voltage shifter 70. This ensures that the voltage at the gate of transistor N10 is higher than the reference voltage, the difference being constant and small. This in turn ensures that in the presence of undesired mismatch between the voltage regulator 10 and voltage limiter 11, e.g. due to mismatches in their transistor devices because of random parameter variations inherent to the semiconductor manufacturing process, the limiter will never act or interfere as long as the regulated voltage is at or below a predetermined target.

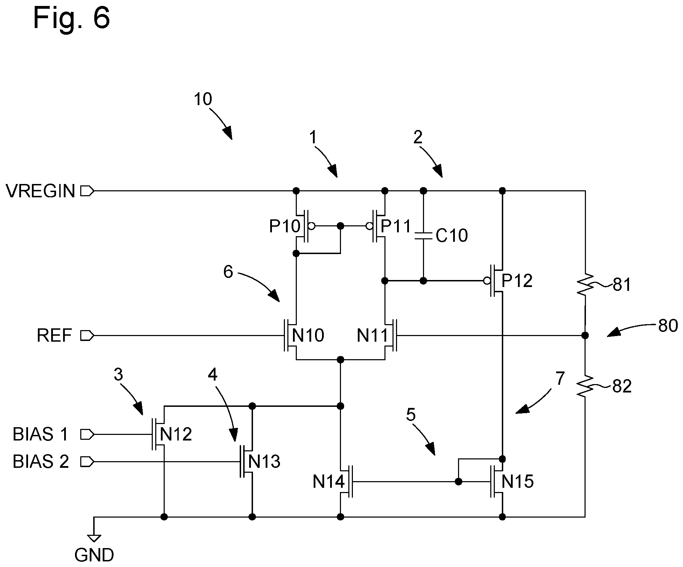

In Figure 6 a voltage limiter 10 according to a further embodiment is shown. The voltage limiter 10 may comprise a resistor divider 80. The resistor divider comprises a series resistor 81 and a shunt resistor 82. According to a further embodiment, the series resistor 81 is substantially smaller than the shunt resistor 82. This ensures that the voltage at the gate of transistor N11 is lower than the output regulator voltage, the difference (in the equilibrium state) being constant and small. Again, this ensures that in the presence of undesired component mismatch or variation the limiter will never act or interfere as long as the regulated voltage is at or below a predetermined target.

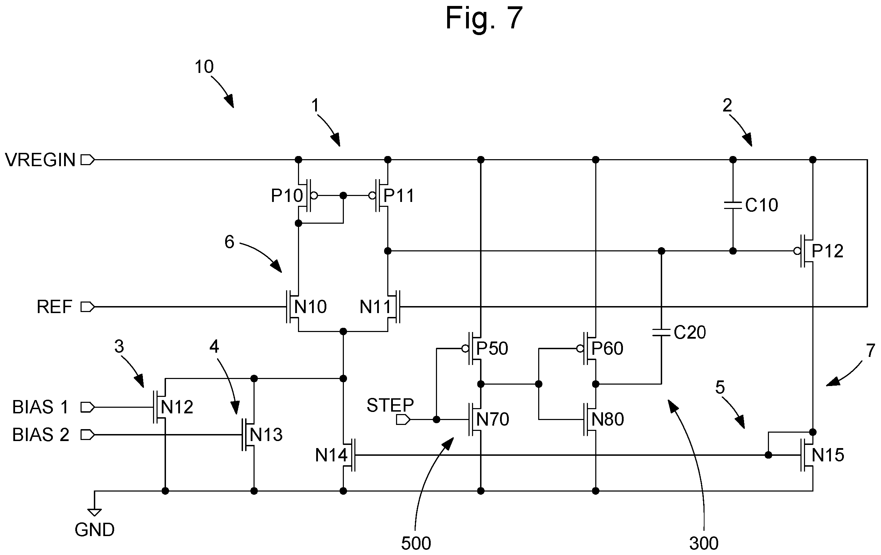

In Figure 7 a voltage limiter 10 according to a further embodiment is shown. The voltage limiter 10 may comprise a step circuit 300 which comprises a control input STEP, a switching arrangement 500 and a step capacitor C20. The switching arrangement 500 comprises PMOS type transistor devices P50, P60 and NMOS type transistor devices N70, N80. The gates of the switching transistors P50 and N70 are both connected to the control input STEP. The drains of the switching transistors P50 and N70 are mutually connected to the gates of the switching transistors P60 and N80. The drains of the switching transistors P60 and N80 are both connected to one terminal of the step capacitor C20 while the opposite terminal of the step capacitor C20 is connected to the gate of the auxiliary load device P12 that is also connected to the transistors N11, P11 and the capacitor C10. The switching arrangement 500 is connected to the limiter step input terminal 14.

The switching arrangement 500 is controllable by the boost signal that is generated by the digital or switching circuit 20. Since the switching arrangement 500 is connected to the limiter step input terminal 14, a control signal generated by the digital or switching circuit 20 is transferred via the connection of the boost signal output terminal 22 to the limiter step input terminal 14 and hence to the switching arrangement 500. That is, the control input BOOST of the regulator 11 and the control input STEP of the limiter 10 are both connected to the control signal 22 generated by the digital or switching circuit 20. In this way, the control signal 22 generated by the digital or switching circuit can be used to change the operating points of both the regulator 11 and the limiter 10 at the same time.

Contrast to the switching arrangement 50 of the boost circuit 30 of the regulator 11 which includes only one inverter stage formed by transistors P5, N7, the switching arrangement 500 of the step circuit 300 of the limiter 10 includes two inverter stages, one formed by the transistors P50, N70 and the other formed by the transistors P60, N80. Consequently, the switching arrangement 50 and the boost circuit 30 react to a rising edge on signal BOOST in the same way as the switching arrangement 500 and the boost circuit 300 react to a falling edge on signal STEP and vice versa.

Therefore, while a rising edge on the boost signal 22 causes the drain current via the pass device P3 to increase, at the same time, it causes the drain current via the auxiliary load device P12 to decrease. And, while a falling edge on the boost signal 22 causes the drain current via the pass device P3 to decrease, at the same time, it causes the drain current via the auxiliary load device P12 to increase. Such arrangement is needed for the operation of the limiter 10 to complement the operation of the regulator 11. The complementary operation means that, as the regulator increases the current flowing into the load 20, the limiter minimises the current effectively flowing out of the load, and, as the regulator reduces the current flowing into the load 20, the limiter maximises the current effectively flowing out of the load.

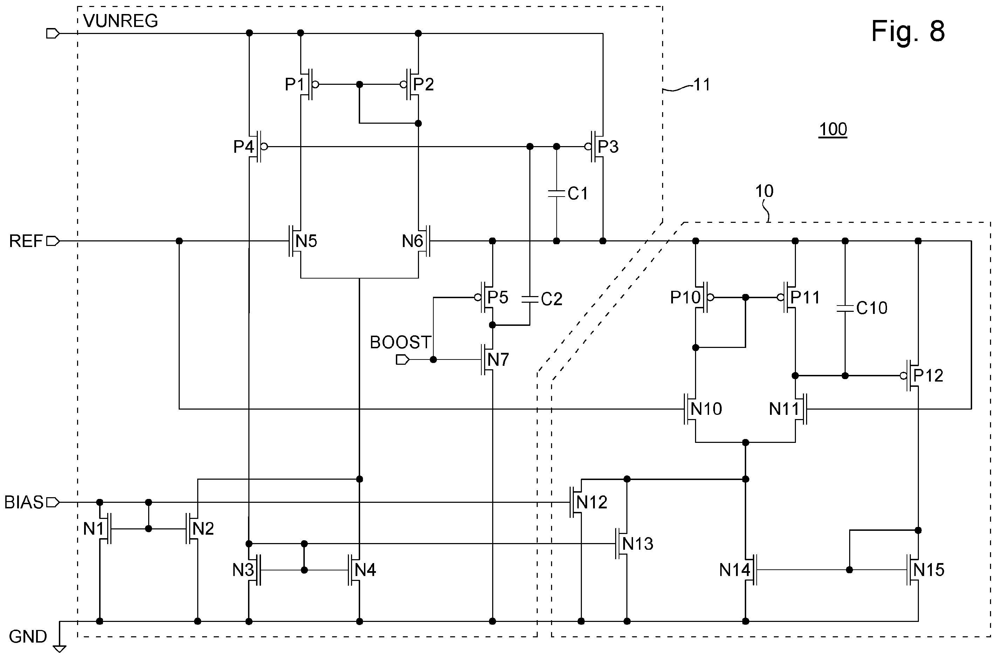

In Figure 8 a circuit system 100 according to a further embodiment comprising a voltage regulator 11 connected to a voltage limiter 10 is shown and the mode of operation of the voltage limiter will be further described below. When the voltage at the power input terminal VREGIN is smaller than the voltage at the reference terminal REF, the voltage limiter 10 presents no activity. In such situation, the current flows via N10, P10 and P11, while P12, N15 and N14 carry little or no drain or bias current. Hence, the full current drawn by the voltage limiter 10 from the voltage regulator is at its minimum or quiescent value, having virtually no effect on the operation of the full system.

Conversely, when voltage at the power input terminal VREGIN is larger than the voltage at the reference terminal REF, the main current path goes via transistor device N11, wherein transistor device N11 carries a drain or bias current much larger than transistor devices N10, P10 or P11. Hence, the gate source control voltage of transistor device P12, which is equal to the voltage across capacitor C10, is large. As such, drain current or bias current flows via the transistor devices P12, N15 and N14. Furthermore, the drain current via the transistor device N14 presents a positive contribution to the bias current of auxiliary differential pair 6.

Since the major part of the bias current of the auxiliary differential pair 6 flows via N11, any increase in the current via P12 and N15 on one side, or any increase in the bias current in the related part of the stage formed by transistor devices N11 and N14 tends to amplify all these currents including the original stimulus, hereby forming a positive feedback loop. Such a behaviour produces a current in the auxiliary load branch formed by P12 and N15 hereby producing extra load current taken from the power input terminal VREGIN of the limiter and, in turn, from the power output terminal VREGOUT of the regulator. Such extra load current prevents further increase of the regulated voltage and ensures that overvoltage condition is avoided.

According to the further embodiment of the voltage limiter 10 as depicted in Figure 4b, the constant bias voltage terminal BIAS1 is connected to the bias terminal BIAS, and herewith connected to the drain of transistor N1 and the gates of both transistors N1 and N2. Further, the adaptive bias voltage terminal BIAS2 is connected to the drain of transistor N3 as well as to the gates of both transistors N3 and N4. Following this embodiment, the current mirror replica 3 and the adaptive bias replica 4 are attached to the auxiliary differential pair N10 and N11, duplicating or tracking the bias currents present in transistor N2 in the current mirror circuit of the voltage regulator 11 and in transistor N4 in the adaptive bias circuit of the voltage regulator 11.

According to a further embodiment, the amplifier main differential pair N5 and N6 of the voltage regulator 11 and the auxiliary differential pair arrangement 6 of the voltage limiter 10 formed by transistors N10 and N11 are transistors devices of the same type which have identical or scaled physical dimensions. That is, the transistors of the amplifier main differential pair N5 and N6 have a first specification and the transistors of the auxiliary differential pair arrangement 6, i.e. N10 and N11, have a second specification such that the first specification and the second specification are identical or scaled by the same factor. By said first and second specifications, the skilled person would understand the physical or drawn channel width and channel length of the transistor devices wherein the length is typically identical in both specifications and the width is scaled by the given factor, in order to reach operating points where values of bias voltages are identical in all devices and values of channel current densities are identical in all devices while values of drain current are scaled by the given factor. Following this embodiment, an improved voltage limiter 10 is achieved which shows no interference to the voltage regulator 11 in the absence of overvoltage.

While the present disclosure has been illustrated by a description of various embodiments and while these embodiments have been described in considerable detail, it is not the intention of the applicant to restrict or in any way limit the scope of the appended claims to such detail. Additional advantages and modifications will readily appear to those skilled in the art. The disclosure in its broader aspects is therefore not limited to the specific details of the illustrative example shown and described. Accordingly, the detailed description thereof should not be construed as restrictive in all aspects but considered as illustrative. The scope of the disclosure should be determined by reasonable interpretation of the appended claims and all changes that come within the equivalent scope are included in the scope of the current disclosure.

### References

- 1: Auxiliary Differential Mirror
- 2: Slew Rate Control Device
- 3: Current Mirror Replica
- 4: Adaptive Bias Replica
- 5: Auxiliary Feedback Mirror
- 6: Auxiliary Differential Pair
- 7: Auxiliary Load Branch
- 10: Voltage Limiter
- 11: Voltage Regulator
- 12: Regulator Boost Input Terminal
- 14: Limiter Step Input Terminal
- 20: Digital or Switching Circuit
- 21: Power Terminal
- 22: Boost Signal Output Terminal
- 24: Front Stage
- 26: Back Stage
- 30: Boost Circuit
- 40: Amplifier Circuit
- 50: Switching Arrangement
- 60: Adaptive Bias Circuit
- 62: Current Mirror Circuit
- 70: Voltage Shifter
- 80: Resistor Divider
- 81: Series Resistor
- 82: Shunt Resistor
- 100: Circuit System
- 300: Step Circuit
- 500: Switching arrangement

## Claims

1. Voltage limiter (10) for a voltage regulator driving a digital or switching circuit (20), the voltage limiter comprising:
- a power input terminal (VREGIN) connectable to the power output terminal of a voltage regulator;
- an auxiliary differential pair arrangement (6) connected to a reference voltage input terminal (REF) and the power input terminal (VREGIN);
- an auxiliary differential mirror (1);
- an auxiliary load branch (7) connecting the power input terminal (VREGIN) to ground (GND) comprising an auxiliary load transistor device (P12);
- wherein the voltage limiter is configured to activate the auxiliary load transistor device (P12) when the voltage at the power input terminal (VREGIN) is larger than the voltage at the reference input terminal (REF).

2. Voltage limiter according to claim 1, wherein the auxiliary differential pair arrangement further comprises a first and a second transistor devices (N10, N11) and the reference input terminal (REF) is connected to the gate of the first transistor device (N10) and the power input terminal (VREGIN) is connected to the gate of the second transistor device (N11), the auxiliary differential pair arrangement further comprising the drain of the second transistor device (N11) being connected to the gate of the auxiliary load transistor device (P12).

3. Voltage limiter according to claim 2, wherein the auxiliary differential mirror comprises a first and a second transistor devices (P10, P11) in mirror configuration wherein the drain of the first transistor device (P10) is connected to the drain of the first transistor device of the auxiliary differential pair arrangement (N10) and wherein the drain of the second transistor device (P11) is connected to the drain of the second transistor device of the auxiliary differential pair arrangement (N11).

4. Voltage limiter according to claim 3, wherein the voltage limiter further comprises a slew rate control capacitor (C10) connected to the drains of the second transistor device of the auxiliary differential mirror (P11) and the second transistor device of the auxiliary differential pair arrangement (N11) configured to determine the slew rate or the speed of change of the gate source control voltage of the auxiliary load transistor device (P12).

5. Voltage limiter (10) according to any one of the preceding claims, further comprising a voltage shifter (70) connected to the gate of the first transistor device of the auxiliary differential pair arrangement (N10).

6. Voltage limiter (10) according to any one of the preceding claims, further comprising a resistor divider (80) connected to the gate of the second transistor device of the auxiliary differential pair arrangement (N11) with a first resistor (81) connected to the power input terminal of the voltage limiter and a second resistor (82) connected to the ground terminal.

7. Circuit system (100) comprising a voltage limiter (10) according to any one of the preceding claims and a voltage regulator (11), wherein the voltage regulator (11) comprises a boost circuit (30) and a regulator boost input terminal (12), wherein the power output terminal of the voltage regulator is connectable to a power terminal of a digital or switching circuit.

8. Circuit system according to any one of the preceding claims, wherein the voltage limiter (10) comprises a step circuit (30) and a limiter step input terminal (14), wherein the step input terminal (14) is connected to both the boost signal (22) and the regulator boost input terminal (12).

9. Circuit system according to claim 7 or 8, wherein the voltage regulator (11) comprises a main differential pair comprising a first and second transistor devices (N5, N6) with a first specification and wherein the first and second transistors of the auxiliary differential pair arrangement (6) have a second specification, and wherein the first and second specifications are identical or scaled by the same factor.

10. Circuit system according to any one of the claims 7 to 9, wherein the voltage regulator (11) comprises a current mirror circuit (62) and an adaptive bias circuit (60), and wherein the voltage limiter (10) comprises a current mirror replica (3) connected to the current mirror circuit (62), and wherein the voltage limiter (10) comprises an adaptive bias replica (4) connected to the adaptive bias circuit (60).

11. Portable electronic device comprising a circuit system according to any one of claims 7 to 10, comprising at least a first digital or switching circuit (20) connected to the output terminal of the voltage regulator (11) of the circuit system (100), wherein said output terminal is also connected to the power input terminal of the voltage limiter (10).

12. Portable electronic device according to claim **11,** wherein the at least one first digital or switching circuit comprises at least a boost output terminal (22) connected to the regulator boost input terminal of the voltage regulator.
